# EUROPEAN PATENT SPECIFICATION

(11) **EP 3 938 963 B1**
(45) Date of publication and mention of the grant of the patent: **02.07.2025**
(21) Application number: 20711874.6
(22) Date of filing: 13.03.2020
(51) Int. Cl.: G06N 3/063, G06N 3/08, G06F 9/50, G06F 18/21, G06F 18/20, G06N 3/00, G06N 3/12, G06N 3/006, G06N 3/126, G06N 3/044, G06N 7/01

(54) **SCHEDULING COMPUTATION GRAPHS USING NEURAL NETWORKS**
PLANUNG VON BERECHNUNGSGRAPHEN MITTELS NEURONALER NETZE
PLANIFICATION DE GRAPHES DE CALCUL À L'AIDE DE RÉSEAUX NEURONAUX

(30) Priority: 13.03.2019 US 201962817971 P
(43) Date of publication of application: 19.01.2022
(73) Proprietor: DeepMind Technologies Limited, London EC4A 3TW (GB)
(72) Inventor: LI, Yujia, London EC4A 3TW (GB); NAIR, Vinod, London EC4A 3TW (GB); GIL, Felix Axel Gimeno, London EC4A 3TW (GB); PALIWAL, Aditya, London EC4A 3TW (GB); LUBIN, Miles C., London EC4A 3TW (GB)
(74) Representative: Marks & Clerk GST
(86) International application number: PCT/EP2020/056883
(87) International publication number: WO 2020/182989

(56) References cited:
- ZHIHAO JIA ET AL: "Beyond Data and Model Parallelism for Deep Neural Networks", ARXIV.ORG, CORNELL UNIVERSITY LIBRARY, 201 OLIN LIBRARY CORNELL UNIVERSITY ITHACA, NY 14853, 14 July 2018 (2018-07-14), XP081117055
- CHRIS ZHANG ET AL: "Graph HyperNetworks for Neural Architecture Search", ARXIV.ORG, CORNELL UNIVERSITY LIBRARY, 201 OLIN LIBRARY CORNELL UNIVERSITY ITHACA, NY 14853, 13 October 2018 (2018-10-13), XP081065216
- RUDY BUNEL ET AL: "Learning to superoptimize programs - Workshop Version", ARXIV.ORG, CORNELL UNIVERSITY LIBRARY, 201 OLIN LIBRARY CORNELL UNIVERSITY ITHACA, NY 14853, 4 December 2016 (2016-12-04), XP080736631
- ANG LI ET AL: "A Generalized Framework for Population Based Training", ARXIV.ORG, CORNELL UNIVERSITY LIBRARY, 201 OLIN LIBRARY CORNELL UNIVERSITY ITHACA, NY 14853, 5 February 2019 (2019-02-05), XP081025735
- MATTHIAS BOEHM ET AL: "On optimizing operator fusion plans for large-scale machine learning in systemML", PROCEEDINGS OF THE VLDB ENDOWMENT; [ACM DIGITAL LIBRARY], ASSOC. OF COMPUTING MACHINERY, NEW YORK, NY, vol. 11, no. 12, 1 August 2018 (2018-08-01), pages 1755 - 1768, XP058416374, ISSN: 2150-8097, DOI: 10.14778/3229863.3229865
- TIANQI CHEN ET AL: "Training Deep Nets with Sublinear Memory Cost", ARXIV.ORG, CORNELL UNIVERSITY LIBRARY, 201 OLIN LIBRARY CORNELL UNIVERSITY ITHACA, NY 14853, 21 April 2016 (2016-04-21), XP080696924

## Description

### BACKGROUND

This specification relates to scheduling computation graphs using neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

One or more portions of a neural network may be implemented by corresponding individual computing device(s) (e.g. one device may implement one layer), so that the multiple devices collectively implement the neural network. Due to the large number and size of operations generally required to generate the outputs in the neural network, one device can consume significant computer resources and take a significant amount of time to perform its task. The time and computational resources collectively required by the multiple devices depend on the task each device is required to perform and the scheduling of those tasks.

Workloads to be executed by one or more devices may be represented as computation graphs and the one or more devices may execute the computation graph in order to execute the workload. Zhihao Jia et al, "Beyond Data and Model Parallelism for Deep Neural Networks", (arXiv:1807.05358v1 [cs.DC] 14 July 2018) proposes a search space for parallelization strategies to parallelize a DNN in the Sample, Operation, Attribute and Parameter dimensions (SOAP), and a deep learning framework that uses guided randomized search of the SOAP space. Chris Zhang et al, "Graph HyperNetworks for Neural Architecture Search" (arXiv:1810.05749v2 [cs.LG] 12 January 2019) proposes a neural architecture search in which, for a given candidate architecture, a graph hypernetwork generates the weights for a neural network of that architecture.

Rudy Bunel et al, "Learning to superoptimize programs - Workshop Version", (arXiv:1611.01787v1 [cs.LG] 4 December 2016) generally relates to superoptimization, which requires the estimation of the best program for a given computational task. In order to deal with large programs, superoptimization techniques perform a stochastic search. This involves proposing a modification of the current program, which is accepted or rejected based on the improvement achieved. This paper proposes learning a proposal distribution over possible modifications using Reinforcement Learning.

Ang Li et al, "A Generalized Framework for Population Based Training", (arXiv:1902.01894v1 [cs.AI] 5 February 2019) proposes a general, black-box Population Based Training (PBT) framework that distributes many asynchronous "trials" (a small number of training steps with warm-starting) across a cluster, coordinated by the PBT controller.

Matthias Boehm et al, "On optimizing operator fusion plans for large-scale machine learning in systemML", (2018; ISSN 2150-8097) introduces a cost-based optimization framework for fusion plans and describes its end-to-end integration into Apache SystemML. The paper presents techniques for candidate exploration and selection of fusion plans, as well as code generation of local and distributed operations over dense, sparse, and compressed data.

Tianqi Chen et al, "Training Deep Nets with Sublinear Memory Cost", (arXiv:1604.06174v2 [cs.LG] 22 April 2016) proposes a systematic approach to reduce the memory consumption of deep neural network training. The paper focus on reducing the memory cost to store the intermediate feature maps and gradients during training. Computation graph analysis is used for automatic in-place operation and memory sharing optimizations.

### SUMMARY

The present invention is defined in the appended independent claims to which reference should be made.

Advantageous features are set out in the appended dependent claims.

This specification describes a system implemented as computer programs on one or more computers in one or more locations that performs a method as defined by claim 1. In general terms, it determines a schedule for a computation graph by combining a neural network policy with an optimization algorithm, e.g., a genetic algorithm. In other words, the system uses the neural network policy to generate one or more instance-specific proposal distributions that are used by an optimization algorithm that schedules the input computation graph for execution across a plurality of (computing) devices. Each device may be a hardware resource that performs operations independent of other devices in the multiple devices.

The generated schedule can define any of a variety of aspects of the execution of input computation graph for the plurality of devices. As a particular example, the schedule can specify which device each operation represented by a node in the graph should be assigned to and, for each device, the order in which the device should execute the operations assigned to the device.

Particular embodiments of the subject matter described in this specification can be implemented so as to realize one or more of the following advantages.

By combining a neural network policy with an optimization algorithm, e.g., a genetic algorithm, as described in this specification, a schedule can be generated for a computation graph that effectively distributes the execution of the workload represented by the graph across a set of devices. In particular, the performance of the optimization algorithm can be significantly improved by incorporating the neural network as described without a significant increase in the time required or computational resources consumed in generating the schedule. This makes it possible to derive a schedule for the computational task such that, when the schedule is implemented, the computational task is performed collectively by the multiple devices with reduced computing resources and/or more rapidly.

The neural network used by the system described in this specification is "generalizable", that is, it can be used to generate high-quality proposal distributions for computation graphs that were not seen during training. Therefore, the system described in this specification may reduce consumption of computational resources (e.g., memory and computing power) by obviating the need to re-train the network each time a new computation graph needs to be scheduled. In particular, many existing techniques that attempt to use neural networks or other machine learning algorithms to determine a placement for a computation graph across devices require that the model that generates the placements be trained for each new graph that needs to be placed. This additional training consumes a large amount of computational resources, particularly because many of these techniques require that the candidate placements generated during training be evaluated by actually executing the graph using the candidate placement. The described technique, on the other hand, can achieve high quality performance on previously unseen graphs without any additional training.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 shows an example computation graph scheduling system.
FIG. 2 is a flow diagram of an example process for scheduling a computation graph.
FIG. 3 is a flow diagram of an example process for training the graph neural network.

Like reference numbers and designations in the various drawings indicate like elements.

### DETAILED DESCRIPTION

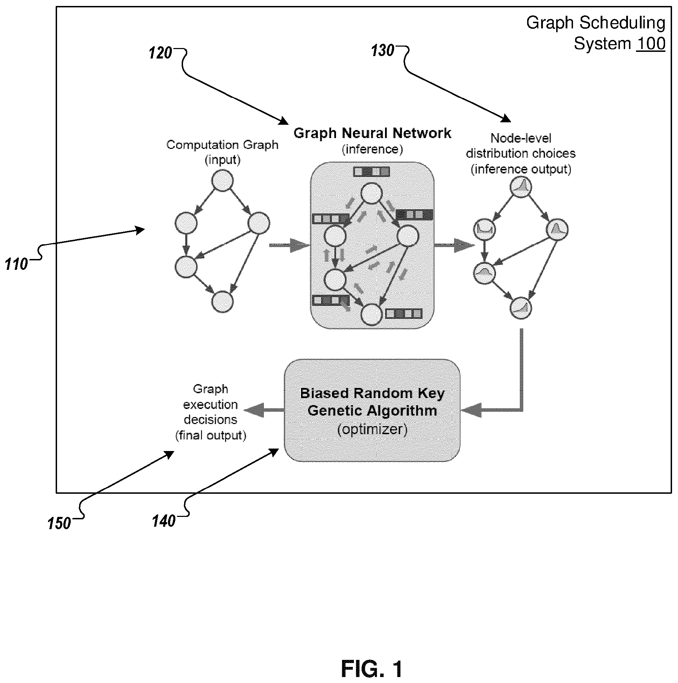

FIG. 1 shows an example graph scheduling system 100. The graph scheduling system 100 is an example of a system implemented as computer programs on one or more computers in one or more locations, in which the systems, components, and techniques described below can be implemented.

The system 100 receives data representing an input computation graph 110 and generates a schedule 150 that includes graph execution decisions for executing the computation graph 110 across multiple devices. Optionally, the input computation graph 110 may be a portion of a larger computation graph. The system may include a unit operative to receive the larger computation graph and to select the input computation graph from it.

The computation graph 110 represents a workload to be distributed across the devices and includes nodes that represent operations and edges that represent dependencies between operations. For example, an edge from one node to another can represent that an output of an operation represented by the first node, e.g., a tensor or other data generated by the operation, is provided as an input to an operation represented by the other node.

As a particular example, the workload can be all of or a portion of a neural network inference workload or a neural network training workload. However, more generally, the computation graph represents any workload that is executed by performing multiple operations that have some kind of dependencies, e.g., data dependencies, between them. The workload may for example be a workload for a computational task which is processing real-world data collected by one or more sensors (e.g. camera(s) and/or microphone(s)), and/or a workload for a computational task which generates control signals to control an electromechanical agent operating on the real world, e.g. moving (e.g. translating and/or changing its configuration) in the real-world.

The devices can include any appropriate types of computer hardware devices, i.e., any devices that are able to perform at least some of the operations represented in the computation graph. In some implementations, the devices are heterogeneous. For example, the devices can include a combination of any of, central processing units (CPUs), graphics processing units (GPUs), application-specific integrated circuits (ASICs) or other special-purpose hardware, field-programmable gate arrays (FPGAs), and so on. In some other implementations, the devices are homogenous, i.e., only include devices of the same device type, i.e., only devices of one of the types above or only devices that are made up of the same combination of devices of the types above.

The schedule 150 generated by the system 100 can specify any of various aspects of the execution of the computation graph 110 on the plurality of devices, i.e., can include any of a variety of graph execution decisions.

In some cases, the schedule 150 assigns each operation represented in the graph 110 to a respective device. In some of these cases, for each device, the schedule 150 also specifies the order in which the device should execute the operations that are assigned to the device.

In some cases, the schedule 150 specifies which tensors that are generated while executing the graph should be prioritized for transfer between devices when multiple tensors need to be transferred from one device to another in order to execute the graph according to the schedule.

In some cases, the schedule 150 specifies multiple operations that should be fused into a single operation during the execution of the computation graph 110. That is, a single device should perform the specified operations, e.g. as if they were a single operation.

In some cases, the schedule 150 specifies which tensors, i.e., which data that is generated by operations represented by nodes, should be stored for later use by other nodes and which tensors should be re-computed. For example, the tensor may not be transferred from a first device which generates it to at least one other device which employs it; instead, the other device (or a third device) may generate the tensor afresh for use by the other device. This may have the advantage that memory space is not consumed by storing the tensor until it is used by the other device.

In particular, the system 100 processes data representing the computation graph using a graph neural network 120 to generate one or more instance-specific proposal distributions 130 ("node-level distribution choices") for an optimization algorithm 140 that schedules the input computation graph for execution across the devices. The proposal distributions are referred to as "instance-specific" because different input computation graphs will result in different proposal distributions being generated by the neural network 120.

More specifically, the graph neural network 120 has been trained to generate proposal distributions 130 that are predicted to result in the optimization algorithm 140 generating a schedule 150 that optimizes a performance metric that measures the execution of the computation graph 110.

For example, the performance metric can measure the peak memory usage during the execution of the graph, the time required to execute the computation graph, or other properties of the execution that reflect the quality of the schedule. In some cases, the execution graph is subject to some constraint, e.g., on the peak memory use at any given time on any of the devices. In these cases, whenever the constraint is violated, e.g., a generated schedule causes some device to use more than a threshold amount of memory at some point during execution of the graph, the system can set performance metric to a predetermined value that indicates that the constraint was violate (and the generated schedule is not valid).

Once the graph neural network 120 has been used to generate the instance-specific proposal distributions 130, the system 100 generates a schedule 150 for the execution of the computation graph by performing the optimization algorithm 140 in accordance with the generated instance-specific proposal distributions 130.

What kind of proposal distributions 130 the system 100 generates is dependent on the inputs that are required by the optimization algorithm 140. In other words, the system can generate proposal distributions that are appropriate for any of a variety of optimization algorithms 140 that can generate an optimized schedule for executing a computation graph on multiple devices.

In some examples, the optimization algorithm is a genetic algorithm. A genetic algorithm begins with an initial population of candidates and, at each of multiple iterations, modifies the population by sampling mutations, crossovers, or both. In this example, each candidate in the initial population is a different possible schedule for the graph. In the example of FIG. 1, the optimization algorithm 140 is a genetic algorithm that is referred to as Biased Random Key Genetic Algorithm (BRKGA).

Conventionally, these algorithms use fixed distributions, i.e., distributions that are always the same for all input graphs, when determining how to modify the population at a given iteration. Instead of these fixed distributions, the system 100 uses the instance-specific distributions generated using the graph neural network. In the BRKGA algorithm, for example, the system generates the parameters for one or more distributions for each node in the computation graph 110 ("node-level distributions") and, optionally, a set of elite biases for each node in the computation graph 110.

In some other examples, the optimization algorithm 140 is a stochastic local search algorithm. A stochastic local search algorithm samples an initial candidate and, at each of multiple iterations, adjusts the current candidate to generate a final candidate. Conventionally, these algorithms use fixed distributions for sampling the initial candidate, for adjusting the current candidate, or both. Instead, the system 100 uses the instance-specific proposal distributions generated using the graph neural network 120 to select the initial candidate, to make the local adjustments at each iteration, or both.

While the described techniques can be used to generate instance-specific proposal distributions for any optimization algorithm that optimizes any aspect of a schedule, an example follows that uses BRKGA to optimize a schedule that specifies (i) operation to device assignments (ii) operation scheduling and (iii) tensor transfer priorities.

In particular, BRKGA maintains a population of chromosomes each representing a candidate schedule.

If the computation graph 110 is to be scheduled across *d* devices and includes nodes representing o operations and produces *t* tensors that may potentially need to be transferred between the devices, each chromosome is an *n* dimensional vector that has three distinct parts: (1) *o* × *d* entries specifying op-to-device affinities for each of the *o* operations; (2) *o* entries specifying scheduling priorities for each of the *o* operations and *(3) t* × *d* entries specifying tensor-to-device priorities for transfers that may be needed.

Once a final candidate has been generated by BRKGA, i.e., a chromosome has been selected, the system 100 then obtains a schedule 150 from the final chromosome by performing a topological sort over the operations given their tensor dependencies, breaking ties by using the corresponding scheduling priorities for the operations.

To generate a final candidate, BRKGA performs multiple evolution steps, i.e., a fixed number of steps or runs for a fixed amount of time or runs for a fixed number of evaluation calls, and is specified by the following: 1) scalar integer parameters π, πₑ, and π_{c}, representing the population size, number of elites, and number of children, respectively, 2) respective elite biases for each of the *n* entries ρᵢ ∈ [0.5, 1.0), and 3) a mutant generation distribution *D* over [0, 1]ⁿ. The procedure aims to find a chromosome that maximizes *f*, a function that maps a chromosome to a performance metric.

The initial population is created by sampling from *D*, using known good solutions, or a mixture of both. One evolution step is completed as follows.
1. Sort the chromosomes in order of decreasing fitness using *f*. Denote the first πₑ, chromosomes in the order as elites and the remaining chromosomes as nonelites.
2. Construct the next generation of the population from three different sources of chromosomes: (a) Copy the elite chromosomes unmodified from the last generation. (b) For each of the π_{c} new children, select two parent chromosomes uniformly at random, one from the nonelites and one from the elites, and apply a crossover procedure to generate a new chromosome given the two parents. (c) Generate the remaining π - πₑ - π_{c} mutated chromosomes in the next generation of the population by sampling from *D*.

Given elite and nonelite chromosome *a* and *b* both in [0, 1]ⁿ, the crossover procedure produces a child chromosome c by independently combining entries from the parents. Specifically, for each index i ∈ 1, . . . , n independently, let cᵢ = aᵢ with probability ρᵢ and cᵢ = bᵢ with probability 1 - ρᵢ.

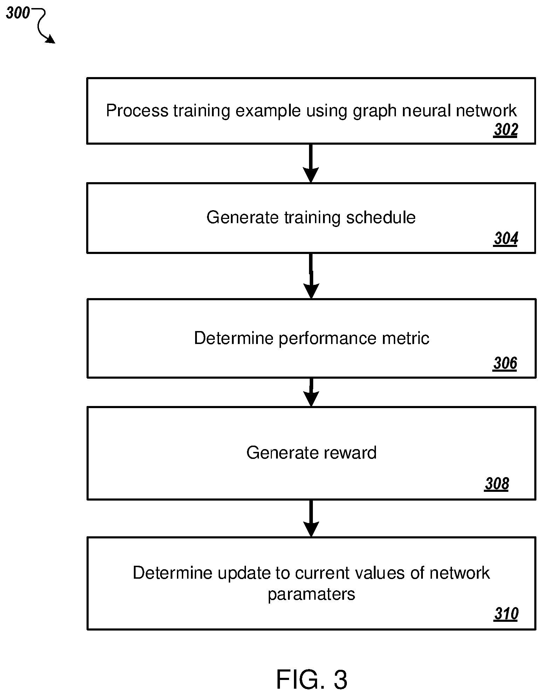

Any new chromosome in the population is then evaluated to determine the fitness *f* of the chromosome, i.e., to determine the performance metric of the schedule defined by the chromosome. Evaluating a schedule is described in more detail below with reference to FIG. 3.

Thus, BRKGA requires the probability distribution *D* and the elite biases in order to operate. Conventionally, each of these would be agnostic to the input graph, i.e., would be pre-configured and held constant for all input graphs. Instead, the graph neural network 120 is used to predict node-specific probability distributions, node-specific elite biases, or both, that are used in place of the probability distribution *D* and the elite biases.

For example, the system can, instead of using a single distribution *D,* use *n* independent beta distributions in place of the single distribution *D*, one for each entry in a given chromosome. The graph neural network 120 may be used to predict the parameters of the beta distributions for the entries of the chromosome that correspond to different operations represented by nodes in the graph, i.e., for a given node in the graph, the graph neural network 120 can be used to predict the parameters of *d +* 1 independent beta distributions, corresponding to device affinities for the operation represented by the node and the scheduling priority for the operation represented by the node. The beta distributions corresponding to the remaining *d* x *t* entries specifying tensor-to-device priorities can be set to graph-agnostic pre-determined distributions.

BRKGA can then use these beta distributions in place of *D* when constructing the initial population and generating new chromosomes for each new generation of the population, i.e., when generating the π - πₑ - π_{c} mutated chromosomes for each new generation.

Optionally, instead of or in addition to predicting the parameters of the beta distributions for a given node, the graph neural network 120 can be used to predict the elite bias for the node or parameters of a probability distribution over elite bias values for the node. Thus, in these cases, the output of the graph neural network 120 is also used to perform the crossover procedure when generating a new generation of the population.

The operation of BRKGA is described in more detail in José Fernando Gongalves and Mauricio G. Resende. Biased random-key genetic algorithms for combinatorial optimization. Journal of Heuristics, 17(5):487-525, October 2011. ISSN 1381-1231. doi: 10.1007/s10732-010-9143-1.

To generate the proposal distributions using the graph neural network 120, the system 100 processes the data representing the computational graph 110, i.e., attribute vectors for the nodes and edges in the graph, using the graph neural network 120 to generate a respective representation vector for each node in the graph. The attribute vectors for the nodes and edges represent features of the node or edge, e.g., sizes of the tensors received as input or output of an operation or transmitted over an edge, or types of operations performed by nodes.

Any of a variety of graph neural network architectures that are configured to process graph data to generate representation vectors for nodes in the graph can be used. One example graph neural network architecture is described in Peter W. Battaglia et al. 2018. Relational inductive biases, deep learning, and graph networks. CoRR (2018). arXiv:1806.01261 http://arxiv.org/abs/1806.01261. Another example graph neural network architecture is described in Justin Gilmer, Samuel S Schoenholz, Patrick F Riley, Oriol Vinyals, and George E Dahl. 2017. Neural message passing for quantum chemistry. arXiv preprint arXiv:1704.01212 (2017). Yet another example graph neural network architecture is described in Franco Scarselli, Marco Gori, Ah Chung Tsoi, Markus Hagenbuchner, and Gabriele Monfardini. 2009. The graph neural network model. IEEE Transactions on Neural Networks 20, 1 (2009), 61-80.

The system 100 then generates the proposal distributions 130 from the representation vectors for the nodes of the graph that are generated by the graph neural network 120.

In some implementations, the system 100 generates the parameters of the proposal distribution(s) for a given node in the graph only from the representation vector for the given node, e.g., by processing the representation vector for the given node through a multi-layer perceptron or other neural network.

In some other implementations, the system 100 generates the parameters of the proposal distribution(s) for the nodes in the graph auto-regressively. That is, the system 100 orders the nodes and then generates the parameters of the proposal distribution(s) for a given node conditioned on the representation vector for the given node and the generated parameters for any nodes that are before the given node in the order, e.g., by processing the feature representations of the nodes in the order using a recurrent neural network.

In some implementations, the system directly generates the parameters of the distributions, e.g., by directly regressing the values of the parameters.

In other implementations, the system 100 can define a discrete action space in which each discrete action in the space maps to a unique set of parameters for the proposal distribution(s) needed by the optimization algorithm for a given node. That is, each action in the discrete action space is a different set of parameters for the proposal distributions needed by the optimization algorithm for a given node. For each node, the system 100 then generates a probability distribution over the discrete action space from the vector representation of the node (using one of the techniques above) and then samples from the probability distribution or selects the action with the highest probability to generate the proposal distributions for the node.

In some implementations, the system 100 then executes the computation graph on the devices in accordance with the generated schedule.

In some other implementations, the system 100 provides data specifying the generated schedule to another system and the other system uses the provided data to execute the computation graph on the devices.

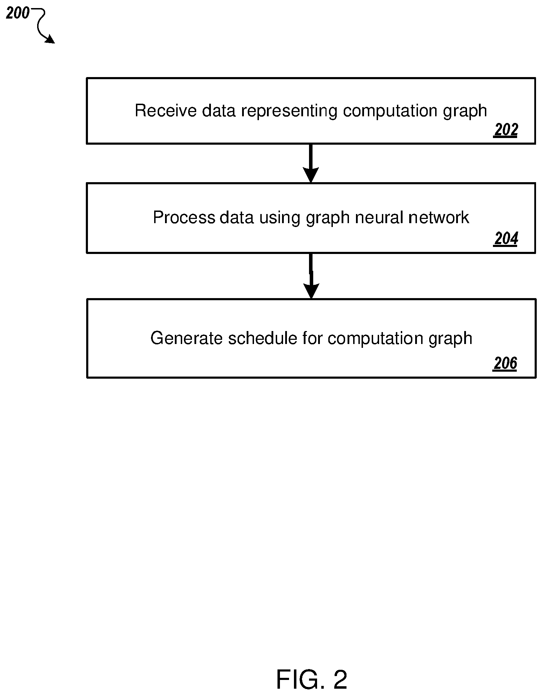

FIG. 2 is a flow diagram of an example process 200 for scheduling a computation graph. For convenience, the process 200 will be described as being performed by a system of one or more computers located in one or more locations. For example, a graph scheduling system, e.g., the graph scheduling system 100 of FIG. 1, appropriately programmed in accordance with this specification, can perform the process 200.

The system obtains data representing an input computation graph (step 202).

The input computation graph includes a plurality of nodes that are connected by edges, with the nodes representing operations and the edges representing dependencies between the operations. For example, the input computation graph can represent all or some of the operations required to perform an inference using a neural network or to train a neural network.

Because of the way that the graph neural network has been trained (as will be described below with reference to FIG. 3), the input computation graph need not be a graph that was included in the training data used to train the graph neural network.

The system processes the data representing the input computation graph using the graph neural network (step 204). As described above, the graph neural network is a neural network having a plurality of network parameters and configured to process the data representing the input computation graph in accordance with the network parameters to generate one or more instance-specific proposal distributions for the optimization algorithm. In other words, the graph neural network generates instance-specific proposal distributions that are used by the optimization algorithm instead of the default or conventional proposal distributions that would conventionally be used by the optimization algorithm.

The system generates a schedule for the input computation graph by performing the optimization algorithm in accordance with the one or more instance-specific proposal distributions generated by the graph neural network for the input computation graph (step 206). In other words, the system runs the optimization algorithm using the instance-specific proposal distributions in place of the conventional proposal distributions that would be used by the optimization algorithm. For example, the system can run the optimization for a fixed number of iterations or for a fixed amount of time and then use the solution found by the algorithm after the fixed number of iterations or after the fixed amount of time as the generated schedule.

Thus, the only computational overhead introduced to the scheduling process by generating the instance-specific probability distributions is the overhead that is required to perform a forward pass through the graph neural network for the computation graph, which will typically be minimal relative to the amount of computational resources consumed by the optimization algorithm.

In some implementations, the system then executes the input computation graph on the plurality of devices by causing the plurality of devices to perform the operations represented by the nodes in the input computation graph in accordance with the generated schedule.

In some other implementations, the system provides data specifying the executed schedule to another system, which then uses the data to cause the devices to perform the operations represented by the nodes in the input computation graph in accordance with the generated schedule.

FIG. 3 is a flow diagram of an example process 300 for training the graph neural network. For convenience, the process 300 will be described as being performed by a system of one or more computers located in one or more locations. For example, a graph scheduling system, e.g., the graph scheduling system 100 of FIG. 1, appropriately programmed in accordance with this specification, can perform the process 300.

The system can repeatedly perform the process 300 for different training examples on a set of training data in order to repeatedly adjust the values of the network parameters to determine trained values of the network parameters. Each training example in the training data is data representing a different training computation graph. Thus, by performing the process 300 the system trains the neural network on different computation graphs and such that the trained neural network will generalize the computation graphs that are not represented in the set of training data.

The system processes a training example, i.e., data that represents a computation graph, in accordance with current values of the network parameters to generate one or more training instance-specific proposal distributions for the optimization algorithm (step 302), i.e., to generate all of the proposal distributions that are required for the optimization algorithm to run.

The system generates a training schedule for the training computation graph represented by the training example by performing the optimization algorithm in accordance with the one or more training instance-specific proposal distributions (step 304).

The system determines a performance metric for the execution of the training computation graph (step 306).

Generally, the performance metric measures one or more properties of the execution of the training computation graph that are attempting to be optimized by the generated schedule. For example, the performance metric can measure the peak memory usage during the execution of the graph, the time required to execute the computation graph, or other properties of the execution that reflect the quality of the schedule. The performance metric can also be derived from a combination of multiple properties of the execution, e.g., as a weighted sum of the peak memory usage and the time required to execute the graph.

In some implementations, the system determines the performance metric by executing the training computation graph on the plurality of devices by causing the plurality of devices to perform the operations represented by the nodes in the input computation graph in accordance with the training schedule and measuring the properties of the execution that are used to generate the performance metric.

In some other implementations, the system maintains a cost model that models the values of the one or more properties for a given input schedule and uses the maintained cost model to determine the values of the one or more properties, i.e., without needing to execute the graph on the devices. Maintaining and using such a computationally cheap cost model enables fast optimization and may be better suited for distributed training of the graph neural network since a cost model is cheap to replicate in parallel actors, while hardware environments are not. Example techniques for constructing such a cost model for a given set of devices are described in Ravichandra Addanki, Shaileshh Venkatakrishnan, Shreyan Gupta, Hongzi Mao, and Mohammad Alizadeh. Placeto: Efficient progressive device placement optimization. In Workshop on ML for Systems at NeurIPS 2018, 2018 and Zhihao Jia, Matei Zaharia, and Alex Aiken. Beyond data and model parallelism for deep neural networks. CoRR, 2018. URL http://arxiv.org/abs/1807.05358.

The system generates a reward from the performance metric (step 308). Generally, the system maps the performance metric to a reward value that can be maximized to improve the performance metrics. In some cases, to improve the generalization of the neural network to different graphs, the system can generate the reward based on the performance metric and a baseline performance metric generated from the execution of the training computation graph in accordance with a baseline schedule. The baseline schedule can be, e.g., a schedule that is generated by the optimization algorithm in accordance with default, graph-agnostic proposal distributions. As a particular example, the reward can be the negative of the ratio between the performance metric and the baseline performance metric.

The system determines an update to the current values of the network parameters based on the reward (step 310). This may be done using a reinforcement learning technique. For example, the system can maximize the expected reward through a policy gradient reinforcement technique, e.g., REINFORCE with or without a variance reducing baseline.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, a Microsoft Cognitive Toolkit framework, an Apache Singa framework, or an Apache MXNet framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method for scheduling and executing an input computation graph representing a computational task to be performed collectively by a plurality of devices, the method comprising:
obtaining (202) data representing the computation graph, the input computation graph comprising a plurality of nodes that are connected by edges, the nodes representing operations and the edges representing dependencies between the operations;
processing (204) the data representing the input computation graph using a graph neural network having a plurality of network parameters, wherein the graph neural network is configured to process the data representing the input computation graph in accordance with first values of the network parameters to generate one or more instance-specific proposal distributions for an optimization algorithm that schedules the input computation graph for execution across the plurality of devices;
generating (206) a schedule for the input computation graph by performing the optimization algorithm in accordance with the one or more instance-specific proposal distributions generated by the graph neural network for the input computation graph, wherein the optimization algorithm generates an assignment that assigns each operation to a respective device from the plurality of devices; and
executing the input computation graph on the plurality of devices by causing the plurality of devices to perform the operations represented by the nodes in the input computation graph in accordance with the generated schedule.

2. The method of claim 1, wherein the input computation graph represents a workload for the computational task which:
processes real-world data collected by one or more sensors; and
generates control signals to control an electromechanical agent operating on the real world.

3. The method of any preceding claim, wherein the graph neural network has been trained on training data that includes data representing a plurality of training computation graphs; and preferably wherein the input computation graph is not represented in the training data.

4. The method of any preceding claim, wherein the graph neural network has been trained to generate instance-specific probability distributions that result in schedules that optimize a performance metric for executing the input computation graph across the plurality of devices; and preferably wherein the performance metric measures one or more of a peak memory usage of the execution of the input computation graph or a running time of the input computation graph.

5. The method of claim 1, further comprising:
training the graph neural network on training data to determine the first values of the network parameters, wherein the training data comprises a plurality of training examples, each training example being data representing a different training computation graph, and wherein the training comprises, for each training example:
processing (302) the training example in accordance with current values of the network parameters to generate one or more training instance-specific proposal distributions for the optimization algorithm;
generating (304) a training schedule for the training computation graph represented by the training example by performing the optimization algorithm in accordance with the one or more training instance-specific proposal distributions;
executing the training computation graph on the plurality of devices by causing the plurality of devices to perform the operations represented by the nodes in the input computation graph in accordance with the training schedule;
determining (306) a performance metric for the execution of the training computation graph;
generating (308) a reward from the performance metric; and
determining (310) an update to the current values of the network parameters based on the reward using a reinforcement learning technique.

6. The method of claim 1, further comprising:
training the graph neural network on training data to determine the first values of the network parameters, wherein the training data comprises a plurality of training examples, each training example being data representing a different training computation graph, and wherein the training comprises, for each training example:
processing the training example in accordance with current values of the network parameters to generate one or more training instance-specific proposal distributions for the optimization algorithm;
generating a training schedule for the training computation graph represented by the training example by performing the optimization algorithm in accordance with the one or more training instance-specific proposal distributions;
determining a performance metric for the training schedule using a cost model that models a value of one or more properties of the training schedule;
generating a reward from the performance metric; and
determining an update to the current values of the network parameters based on the reward using a reinforcement learning technique.

7. The method of any one of claims 5 or 6, wherein the performance metric measures one or more of a peak memory usage or a running time of the execution of the training computation graph in accordance with the training schedule; and/or wherein the reward is based on the performance metric and a baseline performance metric generated from the execution of the training computation graph in accordance with a baseline schedule.

8. The method of any preceding claim, wherein the optimization algorithm that generates the assignment that assigns each operation to a respective device from the plurality of devices, comprises generating, for each device, a device schedule that defines an execution order for the operations that have been assigned to the device.

9. The method of any preceding claim, wherein the schedule identifies operations that should be fused into a single operation during execution of the input computation graph.

10. The method of any preceding claim, wherein data is transmitted between one or more of the operations in the form of tensors represented by edges in the computation graph, and the schedule identifies tensors which should be re-computed instead of stored during execution of the computation graph and/or priorities for transferring tensors between devices.

11. The method of any preceding claim, wherein the input computation graph is a sub-block of a larger computation graph, and preferably, wherein the input computation graph is a graph representation of at least a portion of a neural network inference workload or a neural network training workload.

12. The method of any preceding claim, wherein the optimization algorithm is a genetic algorithm and wherein the one or more instance-specific distributions include, for each of the nodes, one or more probability distributions used by the genetic algorithm to sample mutations, to select crossovers, or both.

13. The method of any preceding claim, wherein the optimization algorithm is a stochastic local search optimization algorithm, and wherein the one or more instance-specific distributions include distributions used by the stochastic local search optimization algorithm to select an initial schedule, to select local optimizations, or both.

14. A system comprising one or more computers and one or more storage devices storing instructions that when executed by the one or more computers cause the one or more computers to perform the respective operations of the method of any preceding claim.

15. A computer program product storing instructions that when executed by one or more computers cause the one or more computers to perform the respective operations of the method of any one of claims 1-13.

## Patentansprüche

1. Computerimplementiertes Verfahren zum Planen und Ausführen eines Eingaberechnungsgraphs, der eine von einer Vielzahl von Vorrichtungen gemeinsam durchzuführende Rechenaufgabe darstellt, wobei das Verfahren Folgendes umfasst:
Erlangen (202) von Daten, die den Berechnungsgraph darstellen, wobei der Eingaberechnungsgraph eine Vielzahl von Knoten umfasst, die durch Kanten verbunden sind, wobei die Knoten Operationen darstellen und die Kanten Abhängigkeiten zwischen den Operationen darstellen;
Verarbeiten (204) der Daten, die den Eingabeberechnungsgraph darstellen, unter Verwendung eines neuronalen Graphennetzes mit einer Vielzahl von Netzparametern, wobei das neuronale Graphennetz dazu konfiguriert ist, die Daten, die den Eingabeberechnungsgraph darstellen, gemäß ersten Werten der Netzparameter zu verarbeiten, um eine oder mehrere instanzspezifische Vorschlagsverteilungen für einen Optimierungsalgorithmus zu erzeugen, der den Eingabeberechnungsgraph zur Ausführung über die Vielzahl von Vorrichtungen hinweg zeitlich einplant;
Erzeugen (206) eines Zeitplans für den Eingaberechnungsgraph durch Durchführen des Optimierungsalgorithmus gemäß der einen oder den mehreren instanzspezifischen Vorschlagsverteilungen, die durch das neuronale Graphennetz für den Eingaberechnungsgraph erzeugt werden, wobei der Optimierungsalgorithmus eine Zuordnung erzeugt, die jede Operation einer jeweiligen Vorrichtung aus der Vielzahl von Vorrichtungen zuordnet; und
Ausführen des Eingaberechnungsgraphs auf der Vielzahl von Vorrichtungen, indem die Vielzahl von Vorrichtungen dazu veranlasst werden, die durch die Knoten im Eingaberechnungsgraph dargestellten Operationen gemäß dem erzeugten Zeitplan durchzuführen.

2. Verfahren nach Anspruch 1, wobei der Eingaberechnungsgraph einen Arbeitsaufwand für die Rechenaufgabe darstellt, der:
reale Daten verarbeitet, die von einem oder mehreren Sensoren erfasst wurden; und
Steuersignale erzeugt, um ein auf der realen Welt arbeitendes elektromechanisches Mittel zu steuern.

3. Verfahren nach einem der vorhergehenden Ansprüche, wobei das neuronale Graphennetz an Trainingsdaten trainiert wurde, die Daten umfassen, die eine Vielzahl von Trainingsberechnungsgraphen darstellen; und wobei vorzugsweise der Eingabeberechnungsgraph nicht in den Trainingsdaten dargestellt ist.

4. Verfahren nach einem der vorhergehenden Ansprüche, wobei das neuronale Graphennetz trainiert wurde, um instanzspezifische Wahrscheinlichkeitsverteilungen zu erzeugen, die zu Zeitplänen führen, die eine Leistungsmetrik zum Ausführen des Eingabeberechnungsgraphs über die Vielzahl von Vorrichtungen hinweg optimieren; und wobei vorzugsweise die Leistungsmetrik eine oder mehrere von einer Spitzenspeicherauslastung der Ausführung des Eingabeberechnungsgraphs oder einer Laufzeit des Eingabeberechnungsgraphs misst.

5. Verfahren nach Anspruch 1, ferner umfassend:
Trainieren des neuronalen Graphennetzes an Trainingsdaten, um die ersten Werte der Netzparameter zu bestimmen, wobei die Trainingsdaten eine Vielzahl von Trainingsbeispielen umfassen,
wobei jedes Trainingsbeispiel Daten sind, die ein unterschiedliches Trainingsberechnungsgraph darstellen, und wobei das Training für jedes Trainingsbeispiel Folgendes umfasst:
Verarbeiten (302) des Trainingsbeispiels in Abhängigkeit von aktuellen Werten der Netzparameter, um eine oder mehrere trainingsinstanzspezifische Vorschlagsverteilungen für den Optimierungsalgorithmus zu erzeugen;
Erzeugen (304) eines Trainingsplans für den Trainingsberechnungsgraph, der durch das Trainingsbeispiel dargestellt wird, durch Durchführen des Optimierungsalgorithmus gemäß der einen oder den mehreren trainingsinstanzspezifischen Vorschlagsverteilungen;
Ausführen des Trainingsberechnungsgraphs auf der Vielzahl von Vorrichtungen, indem die Vielzahl von Vorrichtungen dazu veranlasst werden, die durch die Knoten im Eingaberechnungsgraph dargestellten Operationen gemäß dem Trainingsplan durchzuführen;
Bestimmen (306) einer Leistungsmetrik für die Ausführung des Trainingsberechnungsgraphs;
Erzeugen (308) einer Belohnung aus der Leistungsmetrik; und
Bestimmen (310) einer Aktualisierung der aktuellen Werte der Netzparameter basierend auf der Belohnung unter Verwendung einer Verstärkungslerntechnik.

6. Verfahren nach Anspruch 1, ferner umfassend:
Trainieren des neuronalen Graphennetzes an Trainingsdaten, um die ersten Werte der Netzparameter zu bestimmen, wobei die Trainingsdaten eine Vielzahl von Trainingsbeispielen umfassen,
wobei jedes Trainingsbeispiel Daten sind, die ein unterschiedliches Trainingsberechnungsgraph darstellen, und
wobei das Training für jedes Trainingsbeispiel Folgendes umfasst:
Verarbeiten des Trainingsbeispiels in Abhängigkeit von aktuellen Werten der Netzparameter, um eine oder mehrere trainingsinstanzspezifische Vorschlagsverteilungen für den Optimierungsalgorithmus zu erzeugen;
Erzeugen eines Trainingsplans für den Trainingsberechnungsgraphen, der durch das Trainingsbeispiel dargestellt wird, durch Durchführen des Optimierungsalgorithmus gemäß der einen oder den mehreren trainingsinstanzspezifischen Vorschlagsverteilungen;
Bestimmen einer Leistungsmetrik für den Trainingsplan unter Verwendung eines Kostenmodells, das einen Wert einer oder mehrerer Eigenschaften des Trainingsplans modelliert;
Erzeugen einer Belohnung aus der Leistungsmetrik; und
Bestimmen einer Aktualisierung der aktuellen Werte der Netzparameter basierend auf der Belohnung unter Verwendung einer Verstärkungslerntechnik.

7. Verfahren nach einem der Ansprüche 5 oder 6, wobei die Leistungsmetrik eine oder mehrere von einer Spitzenspeicherauslastung oder einer Laufzeit der Ausführung des Trainingsberechnungsgraphs gemäß dem Trainingszeitplan misst; und/oder wobei die Belohnung auf der Leistungsmetrik und einer Basisleistungsmetrik basiert, die aus der Ausführung des Trainingsberechnungsgraphs gemäß einem Basiszeitplan erzeugt wird.

8. Verfahren nach einem der vorhergehenden Ansprüche, wobei der Optimierungsalgorithmus, der die Zuordnung erzeugt, die jede Operation einer jeweiligen Vorrichtung aus der Vielzahl von Vorrichtungen zuordnet, Erzeugen eines Vorrichtungszeitplans für jede Vorrichtung umfasst, der einen Ausführungsauftrag für die Operationen definiert, die der Vorrichtung zugeteilt wurden.

9. Verfahren nach einem der vorhergehenden Ansprüche, wobei der Zeitplan Operationen identifiziert, die während der Ausführung des Eingaberechnungsgraphs zu einer einzelnen Operation zu verschmelzen sind.

10. Verfahren nach einem der vorhergehenden Ansprüche, wobei Daten zwischen einer oder mehreren der Operationen in Form von Tensoren übertragen werden, die durch Kanten in dem Berechnungsgraph dargestellt werden, und wobei der Zeitplan Tensoren, die während der Ausführung des Berechnungsgraphs neu zu berechnen statt zu speichern sind, und/oder Prioritäten zum Übertragen von Tensoren zwischen Vorrichtungen identifiziert.

11. Verfahren nach einem der vorhergehenden Ansprüche, wobei der Eingabeberechnungsgraph ein Unterblock eines größeren Berechnungsgraphs ist, und wobei vorzugsweise der Eingabeberechnungsgraph eine Graphendarstellung von mindestens einem Abschnitt eines Interferenzaufwands des neuronalen Netzes oder eines Trainingsaufwands des neuronalen Netzes ist.

12. Verfahren nach einem der vorhergehenden Ansprüche, wobei der Optimierungsalgorithmus ein genetischer Algorithmus ist und wobei die eine oder mehreren instanzspezifischen Verteilungen für jeden der Knoten eine oder mehrere Wahrscheinlichkeitsverteilungen beinhalten, die durch den genetischen Algorithmus verwendet werden, um Mutationen zu sampeln, Kreuzungen auszuwählen oder beides.

13. Verfahren nach einem der vorhergehenden Ansprüche, wobei der Optimierungsalgorithmus ein stochastischer lokaler Suchoptimierungsalgorithmus ist, und wobei die eine oder mehreren instanzspezifischen Verteilungen Verteilungen beinhalten, die durch den stochastischen lokalen Suchoptimierungsalgorithmus verwendet werden, um einen anfänglichen Zeitplan auszuwählen, lokale Optimierungen auszuwählen oder beides.

14. System, umfassend einen oder mehrere Computer und eine oder mehrere Speichervorrichtungen, die Anweisungen speichern, die bei Ausführung durch den einen oder die mehreren Computer den einen oder die mehreren Computer dazu veranlassen, die jeweiligen Operationen des Verfahrens nach einem der vorhergehenden Ansprüche durchzuführen.

15. Computerprogrammprodukt, das Anweisungen speichert, die bei Ausführung durch einen oder mehrere Computer den einen oder die mehreren Computer dazu veranlassen, die jeweiligen Operationen des Verfahrens nach einem der Ansprüche 1-13 durchzuführen.

## Revendications

1. Procédé mis en œuvre par ordinateur pour planifier et exécuter un graphe de calcul d'entrée représentant une tâche de calcul à réaliser collectivement par une pluralité de dispositifs, le procédé comprenant :
l'obtention (202) de données représentant le graphe de calcul, le graphe de calcul d'entrée comprenant une pluralité de nœuds qui sont connectés par des arêtes, les nœuds représentant des opérations et les arêtes représentant des dépendances entre les opérations ;
le traitement (204) des données représentant le graphe de calcul d'entrée à l'aide d'un réseau neuronal de graphe ayant une pluralité de paramètres de réseau, dans lequel le réseau neuronal de graphe est configuré pour traiter les données représentant le graphe de calcul d'entrée selon les premières valeurs des paramètres de réseau pour générer une ou plusieurs distributions de propositions spécifiques à l'instance pour un algorithme d'optimisation qui planifie le graphe de calcul d'entrée pour une exécution sur la pluralité de dispositifs ;
la génération (206) d'un programme pour le graphe de calcul d'entrée en réalisant l'algorithme d'optimisation selon une ou plusieurs distributions de propositions spécifiques à l'instance générées par le réseau neuronal de graphe pour le graphe de calcul d'entrée, dans lequel l'algorithme d'optimisation génère une affectation qui attribue chaque opération à un dispositif respectif parmi la pluralité de dispositifs ; et
l'exécution du graphe de calcul d'entrée sur la pluralité de dispositifs en amenant la pluralité de dispositifs à réaliser les opérations représentées par les nœuds dans le graphe de calcul d'entrée selon le programme généré.

2. Procédé selon la revendication 1, dans lequel le graphe de calcul d'entrée représente une charge de travail pour la tâche de calcul qui :
traite les données du monde réel collectées par un ou plusieurs capteurs ; et
génère des signaux de commande pour commander un agent électromécanique fonctionnant dans le monde réel.

3. Procédé selon une quelconque revendication précédente, dans lequel le réseau neuronal de graphe a été entraîné sur des données d'entraînement qui comportent des données représentant une pluralité de graphes de calcul d'entraînement ; et de préférence dans lequel le graphe de calcul d'entrée n'est pas représenté dans les données d'entraînement.

4. Procédé selon une quelconque revendication précédente, dans lequel le réseau neuronal de graphe a été entraîné pour générer des distributions de probabilité spécifiques à l'instance qui aboutissent à des programmes qui optimisent une mesure de réalisation pour l'exécution du graphe de calcul d'entrée sur la pluralité de dispositifs ; et de préférence dans lequel la mesure de réalisation mesure un ou plusieurs d'une utilisation maximale de la mémoire de l'exécution du graphe de calcul d'entrée ou d'un temps d'exécution du graphe de calcul d'entrée.

5. Procédé selon la revendication 1, comprenant également :
l'entraînement du réseau neuronal de graphe sur des données d'entraînement pour déterminer les premières valeurs des paramètres du réseau, dans lequel les données d'entraînement comprennent une pluralité d'exemples d'entraînement, chaque exemple d'entraînement étant des données représentant un graphe de calcul d'entraînement différent, et dans lequel l'entraînement comprend, pour chaque exemple d'entraînement :
le traitement (302) de l'exemple d'entraînement selon les valeurs actuelles des paramètres du réseau pour générer une ou plusieurs distributions de propositions spécifiques à l'instance d'entraînement pour l'algorithme d'optimisation ;
la génération (304) d'un programme d'entraînement pour le graphe de calcul d'entraînement représenté par l'exemple d'entraînement en réalisant l'algorithme d'optimisation selon les une ou plusieurs distributions de propositions spécifiques à l'instance d'entraînement ;
l'exécution du graphe de calcul d'entraînement sur la pluralité de dispositifs en amenant la pluralité de dispositifs à réaliser les opérations représentées par les nœuds dans le graphe de calcul d'entrée selon le programme d'entraînement ;
la détermination (306) d'une mesure de réalisation pour l'exécution du graphe de calcul d'entraînement ;
la génération (308) d'une récompense à partir de la mesure de réalisation ; et
la détermination (310) d'une mise à jour des valeurs actuelles des paramètres du réseau sur la base de la récompense à l'aide d'une technique d'apprentissage par renforcement.

6. Procédé selon la revendication 1, comprenant également :
l'entraînement du réseau neuronal de graphe sur des données d'entraînement pour déterminer les premières valeurs des paramètres du réseau, dans lequel les données d'entraînement comprennent une pluralité d'exemples d'entraînement, chaque exemple d'entraînement étant des données représentant un graphe de calcul d'entraînement différent, et dans lequel l'entraînement comprend, pour chaque exemple d'entraînement :
le traitement de l'exemple d'entraînement selon les valeurs actuelles des paramètres du réseau pour générer une ou plusieurs distributions de propositions spécifiques à l'instance d'entraînement pour l'algorithme d'optimisation ;
la génération d'un programme d'entraînement pour le graphe de calcul d'entraînement représenté par l'exemple d'entraînement en réalisant l'algorithme d'optimisation selon les une ou plusieurs distributions de propositions spécifiques à l'instance d'entraînement ;
la détermination d'une mesure de réalisation pour le programme de entraînement à l'aide d'un modèle de coût qui modélise une valeur d'une ou de plusieurs propriétés du programme de entraînement ;
la génération d'une récompense à partir de la mesure de réalisation ; et
la détermination d'une mise à jour des valeurs actuelles des paramètres du réseau sur la base de la récompense à l'aide d'une technique d'apprentissage par renforcement.

7. Procédé selon l'une quelconque des revendications 5 ou 6, dans lequel la mesure de réalisation mesure un ou plusieurs d'une utilisation maximale de la mémoire ou d'un temps d'exécution du graphe de calcul d'entraînement selon le programme d'entraînement ; et/ou dans lequel la récompense est basée sur la mesure de réalisation et une mesure de réalisation de base générée à partir de l'exécution du graphe de calcul d'entraînement selon un programme de base.

8. Procédé selon une quelconque revendication précédente, dans lequel l'algorithme d'optimisation qui génère l'affectation qui attribue chaque opération à un dispositif respectif parmi la pluralité de dispositifs, comprend la génération, pour chaque dispositif, d'un programme de dispositif qui définit un ordre d'exécution pour les opérations qui ont été attribuées au dispositif.

9. Procédé selon une quelconque revendication précédente, dans lequel le programme identifie les opérations qui doivent être fusionnées en une seule opération pendant l'exécution du graphe de calcul d'entrée.

10. Procédé selon une quelconque revendication précédente, dans lequel les données sont transmises entre l'une ou plusieurs des opérations sous la forme de tenseurs représentés par des arêtes dans le graphe de calcul, et le programme identifie les tenseurs qui doivent être recalculés au lieu d'être stockés pendant l'exécution du graphe de calcul et/ou les priorités pour transférer les tenseurs entre les dispositifs.

11. Procédé selon une quelconque revendication précédente, dans lequel le graphe de calcul d'entrée est un sous-bloc d'un graphe de calcul plus grand, et de préférence, dans lequel le graphe de calcul d'entrée est une représentation de graphe d'au moins une partie d'une charge de travail d'inférence de réseau neuronal ou d'une charge de travail d'entraînement de réseau neuronal.

12. Procédé selon une quelconque revendication précédente, dans lequel l'algorithme d'optimisation est un algorithme génétique et dans lequel les une ou plusieurs distributions spécifiques à l'instance comportent, pour chacun des nœuds, une ou plusieurs distributions de probabilité utilisées par l'algorithme génétique pour échantillonner des mutations, pour sélectionner des croisements, ou les deux.

13. Procédé selon une quelconque revendication précédente, dans lequel l'algorithme d'optimisation est un algorithme d'optimisation de recherche locale stochastique, et dans lequel les une ou plusieurs distributions spécifiques à l'instance comportent des distributions utilisées par l'algorithme d'optimisation de recherche locale stochastique pour sélectionner un programme initial, pour sélectionner des optimisations locales, ou les deux.

14. Système comprenant un ou plusieurs ordinateurs et un ou plusieurs dispositifs de stockage stockant des instructions qui, lorsqu'elles sont exécutées par les un ou plusieurs ordinateurs, amènent les un ou plusieurs ordinateurs à réaliser les opérations respectives du procédé selon une quelconque revendication précédente.

15. Produit de programme informatique stockant des instructions qui, lorsqu'elles sont exécutées par un ou plusieurs ordinateurs, amènent les un ou plusieurs ordinateurs à réaliser les opérations du procédé respectif selon l'une quelconque des revendications 1 à 13.
